# EUROPÄISCHE PATENTANMELDUNG

(11) **EP 4 701 070 A1**
(43) Veröffentlichungstag der Anmeldung: **25.02.2026**
(21) Anmeldenummer: 25196992.9
(22) Anmeldetag: 20.08.2025
(51) Int. Cl.: H02S 20/20, F24S 25/20

(54) **BEFESTIGUNGSSYSTEM FÜR EIN PLATTENFÖRMIGES BAUELEMENT AN EINER DACHKONSTRUKTION UND MODUL FÜR EIN DACH**

(30) Priorität: 20.08.2024 DE 102024123778
(71) Anmelder: BMI Group Holdings UK Limited, Reading, Berkshire RG1 1LX (GB)
(72) Erfinder: Fleckenstein, Stefan, 64285 Darmstadt (DE)
(74) Vertreter: Patentanwälte Olbricht Buchhold Keulertz

(57) **Zusammenfassung**

Die Erfindung betrifft ein Befestigungssystem (1) zur Befestigung eines plattenförmiges Bauelements (2) an einer Dachkonstruktion (3), wobei das Befestigungssystem (1) profilierte Träger (4) umfasst, die zu mindestens einem das Bauelement (2) umschließenden Rahmen (5) verbindbar ausgestaltet sind, und wobei die profilierten Träger (4) einen firstseitigen Querträger (6) und einen firstseitigen Querträger (7) sowie zwei in First-Traufe-Richtung (FT) verlaufende Längsträger (8) umfassen, dadurch gekennzeichnet, dass der firstseitige Querträger (6) und der firstseitige Querträger (7) zur Ausbildung einer regensicheren Verbindung (9) ausgestaltet sind, so dass eine überdeckungsfreie Aneinanderreihung der plattenförmigen Bauelementen (2) in First-Traufe-Richtung (FT) erfolgt. Die Erfindung betrifft außerdem ein Modul (100) für ein Dach, insbesondere für ein Schrägdach, umfassend ein solches Befestigungssystem (1) und ein solches plattenförmiges Bauelement (2).

## Beschreibung

Die Erfindung betrifft ein Befestigungssystem zur Befestigung eines plattenförmiges Bauelements an einem Dach, insbesondere an einem Schrägdach, sowie ein Modul bestehend aus dem Befestigungssystem und dem plattenförmigen Bauelement.

Als plattenförmige Bauelemente kommen vor allem rechteckige photovoltaische oder solarthermische Platten in Betracht. Entsprechend handelt es sich bei den erhaltenen Modulen vor allem um photovoltaische Module (sog. PV-Module) oder solarthermische Module. Ein PV-Modul weist üblicherweise ein Laminat mit photovoltaischen Elementen auf, das in einem Rahmen eingefasst ist. Bereits bei der Herstellung werden mehrere photovoltaische Elemente eines Laminats zu einer elektrischen Spannungskette hintereinandergeschaltet, um eine höhere Spannung zur Verfügung zu stellen. Nachteilig ist dabei, dass ein abgeschattetes Element den Wirkungsgrad der gesamten Kette herabsetzt.

Dieses Problem wir im Stand der Technik üblicherweise dadurch gelöst, dass die Laminate zu Modulen für die Aufdachmontage gefertigt werden. Dabei werden die Module auf Stützen nach Art eines Dachhakens über der Dacheindeckung montiert.

Aus der DE 10 2008 007 334 A1 ist nun ein Befestigungssystem bekannt, mit dem sich mehrere PV-Laminate in Längs- und in Querrichtung parallel nebeneinanderlegen lassen, wobei die Laminate die Dacheindeckung vollwertig ersetzen. Dazu werden die Laminate in Rahmen aus profilierten Längs- und Querträgern eingefasst. Die auf diese Weise erhaltenen Module werden auf der Dachkonstruktion befestigt, wobei sich die die Module in Längsrichtung lediglich im Bereich der Querträger überdecken. Hierdurch wird eine Abschattung der Laminate vermieden. Dabei ist im Sinne dieser Offenbarung unter der Längsrichtung die First-Traufe-Richtung zu verstehen. Entsprechen bezeichnet die Querrichtung eine Parallele zum First bzw. zur Traufe.

Die Überdeckung der Module im Bereich der Querträger der Befestigungsrahmen hat allerdings bei der Aufdachmontage deutlich sichtbare Stufen zwischen den in Längsrichtung aufeinanderfolgend verlegten Modulen zur Folge, was zu einem schuppenartigen Erscheinungsbild der modularen Dacheindeckung führt.

Aufgabe der vorliegenden Erfindung ist es, ein Befestigungssystem für plattenförmige Bauelemente bereitzustellen, das eine stufenfreie modulare Verlegung der plattenförmigen Bauelemente ermöglicht.

Hauptmerkmale der Erfindung sind im kennzeichnenden Teil von Anspruch 1 angegeben. Ein weiterer Aspekt der Erfindung wird in Anspruch 18 wiedergegeben. Besondere Ausgestaltungen der Erfindung sind Gegenstand der Ansprüche 2 bis 17 bzw. des Anspruchs 19.

Die Aufgabe wird durch ein Befestigungssystem gemäß dem Hauptanspruch gelöst. Dabei ist insbesondere ein Befestigungssystem zur Befestigung eines plattenförmiges Bauelements an einer Dachkonstruktion vorgesehen, wobei das Befestigungssystem profilierte Träger umfasst, die zu mindestens einem das Bauelement umschließenden Rahmen verbindbar ausgestaltet sind, und wobei die profilierten Träger einen firstseitigen Querträger und einen traufseitigen Querträger sowie zwei in First-Traufe-Richtung verlaufende Längsträger umfassen. Das Befestigungssystem ist insbesondere dadurch gekennzeichnet, dass der firstseitige Querträger und der traufseitige Querträger zur Ausbildung einer regensicheren Verbindung ausgestaltet sind, so dass eine überdeckungsfreie Aneinanderreihung der plattenförmigen Bauelementen in First-Traufe-Richtung erfolgt.

In jeden Rahmen des Befestigungssystems kann je ein plattenförmiges Bauelement eingefasst werden. Die Gesamtheit aus einem Rahmen und einem darin eingefassten plattenförmigen Bauelement wird dabei als Modul bezeichnet. Die Querträger je zweier benachbarter Module greifen derart passgenau ineinander, dass sie eine regensichere Verbindung ausbilden. Die Montage der Module erfolgt dabei vorzugsweise in Richtung vom First zur Traufe.

Mit einem derartigen Befestigungssystem lassen sich die plattenförmigen Bauelemente bzw. fertigen Module in Längsrichtung Bauelemente ohne Überlappungen zwischen den einzelnen Bauelementen verlegen. Folglich wird das aus dem Stand der Technik bekannte "schuppenartige" Erscheinungsbild der verlegten Module vermieden. Mit anderen Worten: Die Verbindung der Querträger kann derart erfolgen, dass die in First-Traufe-Richtung aneinandergereihten Module im Wesentlichen in einer gemeinsamen Ebene liegen, welche im Sinne dieser Offenbarung auch als First-Traufe-Ebene bezeichnet wird. Die Gesamtheit der aneinandergereihten Module bildet also im Wesentlichen eine glatte Fläche aus - ohne Stufen zwischen den einzelnen, in Längsrichtung aneinandergereihten Modulen.

Gemäß einer weiteren Ausführungsform kann vorgesehen sein, dass der traufseitige Querträger an seiner Oberseite eine Abdecklippe aufweist, die bei bestimmungsgemäßem Gebrauch des Befestigungssystems in Traufrichtung ragt und bei Ausbildung der regensicheren Verbindung den firstseitigen Querträger zumindest partiell überdeckt. Im Sinne dieser Offenbarung ist unter der "Oberseite" eines Bauelements oder einer Struktur eines Bauelements diejenige Seite zu verstehen, die nach Montage des Bauelements auf dem Dach von der Dachkonstruktion weg zeigt. Entsprechend ist unter der "Unterseite" eines Bauelements oder einer Struktur eines Bauelements diejenige Seite zu verstehen, die nach Montage des Bauelements auf dem Dach in Richtung der Dachkonstruktion zeigt. Die Begriffe "oben" und "unten" finden analog Anwendung. Gemäß einer weiteren Ausführungsform kann vorgesehen sein, dass die Abdecklippe an ihrer Unterseite eine Kapillarsperre aufweist, die bei bestimmungsgemäßem Gebrauch des Befestigungssystems auf der Oberseite des firstseitigen Querträgers aufliegt. Die Kapillarsperre ist dabei vorzugsweise als Wulst an der Unterseite der Abdecklippe ausgestaltet ist. Die Abdecklippe sorgt zum einen für ein glatten und lückenlosen Übergang zwischen zwei in Längsrichtung aufeinanderfolgenden plattenförmigen Bauelementen bzw. Modulen; zum anderen fungiert sie nicht zuletzt aufgrund der Kapillarsperre an ihrer Unterseite als Wasserstutz, indem sie ein Eindringen von Schlagregen zwischen die Querträger verhindert. Die Kapillarsperre kann vorteilhafterweise mit einer Kraft auf die Oberseite des firstseitigen Querträgers drücken. Hierdurch wird zum einen die Funktion der Kapillarsperre gewährleistet, zum anderen erfolgt hierdurch eine Fixierung des firstseitigen Querträgers im Profil des traufseitigen Querträgers. Durch diese Ausführung des Überdeckungsbereichs der Querträger kann auf jegliches Dichtungsmaterial verzichtet werden, so dass die Verlegung derartiger Module auf besonders einfache Art und Weise erfolgen kann.

Gemäß einer weiteren Ausführungsform kann vorgesehen sein, dass der traufseitige Querträger an seiner Unterseite ein Montageelement zur Montage des traufseitigen Querträgers an der Dachkonstruktion aufweist. Über das Montageelement kann der traufseitige Querträger auf einfache Art und Weise an der Dachkonstruktion befestigt werden, beispielsweise durch Verschrauben, Verkleben oder über andere gängige Fixiermethoden.

Gemäß einer weiteren Ausführungsform kann vorgesehen sein, dass das Montageelement einen ersten Abschnitt mit einer Kabelanbindung, einen an den ersten Abschnitt anschließenden zweiten Abschnitt mit Montagelöchern, und einen an den zweiten Abschnitt anschließenden Auflageabschnitt umfasst. Der zweite Abschnitt schließt dabei über einen Knick an den ersten Abschnitt, und der Auflageabschnitt schließt über einen Knick an den zweiten Abschnitt an. Die beiden Knicke sind dabei vorzugsweise so ausgestaltet, dass der Auflageabschnitt parallel zur Unterseite des traufseitigen Querträgers verläuft. Mit Hilfe der Kabelanbindung beispielsweise das Erdungskabel des PV-Laminats verbunden werden. So kann die Kabelanbindung beispielsweise eine Verbindungsstelle für das Erdungskabel eines PV-Elements sein.

Gemäß einer weiteren Ausführungsform kann vorgesehen sein, dass der erste Abschnitt und der zweite Abschnitt des Montageelements bei bestimmungsgemäßer Montage des Befestigungssystems jeweils schräg zur Montagefläche der Dachkonstruktion verlaufen, und dass der Auflageabschnitt bei bestimmungsgemäßer Montage des Befestigungssystems parallel zur Montagefläche der Dachkonstruktion verläuft. Als Montagefläche der Dachkonstruktion ist dabei die Fläche der Dachkonstruktion zu verstehen, die das Befestigungssystem trägt und auf der das Befestigungssystem montiert wird. Sie verläuft folglich parallel zur First-Traufe-Ebene. Der schräge Verlauf des ersten Abschnitts und des zweiten Abschnitts des Montageelements ermöglicht eine besonders einfache Montage, da sich die für die Montage verwendeten Fixiermittel (z.B. Schrauben) in einem Winkel in die Dachkonstruktion einbringen lassen, der nicht senkrecht zur Montagefläche verläuft. Hierdurch entsteht beim Einbringen der Fixiermittel mehr Platz für den Monteur, sodass er ungehindert Werkzeuge wie beispielsweise Akkuschrauber oder dergleichen verwenden kann.

Gemäß einer weiteren Ausführungsform kann vorgesehen sein, dass der Auflageabschnitt bei bestimmungsgemäßer Montage des Befestigungssystems flach auf der Montagefläche der Dachkonstruktion aufliegt. Durch den flach aufliegenden Auflageabschnitt des Montagelements wird eine größere Kontaktfläche zwischen der Montagefläche und dem Montagelement hergestellt, was eine besonders zuverlässige Verbindung des an der Dachkonstruktion montierten traufseitigen Querträgers zur Folge hat. Somit wird die Stabilität des gesamten Befestigungssystems nach erfolgter Montage verbessert.

Gemäß einer weiteren Ausführungsform kann vorgesehen sein, dass das Montageelement einen Vorsprung aufweist, der bei bestimmungsgemäßer Montage des Befestigungssystems mit der Montagefläche der Dachkonstruktion in Kontakt kommt. Der Vorsprung des Montageelements wird durch Fixieren des Montageelements an der Dachkonstruktion in die Montagefläche der Dachkonstruktion eingedrückt, wodurch die Stabilität des Montageelements und somit des montierten Befestigungssystems zusätzlich erhöht wird.

Gemäß einer weiteren Ausführungsform kann vorgesehen sein, dass der firstseitige Querträger an seiner Oberseite eine Wassersperre aufweist, die bei Ausbildung der regensicheren Verbindung in das Profil des traufseitigen Querträgers ragt. Die Wassersperre dient zusätzlich zur Kapillarsperre der Abdecklippe als Wasserschutz, indem es ein Eindringen von Regenwasser in die Querträgerverbindung verhindert.

Gemäß einer weiteren Ausführungsform kann vorgesehen sein, dass der firstseitige Querträger eine erste Wasserrinne aufweist, die bei Ausbildung der regensicheren Verbindung in das in Firstrichtung zeigende Profil des traufseitigen Querträgers ragt, wobei die erste Wasserrinne vorzugsweise unterhalb der Wassersperre angeordnet ist. Im Falle eines erhöhten Wasseraufkommens, etwa aufgrund von Starkregenereignissen, kann es dazu kommen, dass Regenwasser sowohl Kapillarsperre als auch Wassersperre überwindet. Das auf diese Weise eindringende Wasser kann in der ersten Wasserrinne gesammelt werden und anschließend über entsprechende Abflussrinnen ablaufen. Die Abflussrinnen verlaufen vorzugsweise in Querrichtung und führen das Wasser in Richtung der Längsträger. Von dort kann das Wasser über einen Wasserlauf ablaufen, den jeder Längsträger aufweisen kann.

Gemäß einer weiteren Ausführungsform kann vorgesehen sein, dass der traufseitige Querträger eine zweite Wasserrinne aufweist, die bei Ausbildung der regensicheren Verbindung in das Profil des firstseitigen Querträgers ragt, wobei die zweite Wasserrinne vorzugsweise an der Unterseite des traufseitigen Querträgers angeordnet ist. Die zweite Wasserrinne ist dazu da, eventuell aus der ersten Wasserrinne überlaufendes Wasser aufzufangen und zu sammeln. Analog zur ersten Wasserrinne kann das Wasser über Abflussrinnen in Richtung der Längsträger aus der zweiten Wasserrinne ablaufen. Die beiden Wasserrinnen sorgen gemeinsam mit den Wassersperren dafür, dass kein Wasser über die Verbindung der firstseitigen Querträger mit den traufseitigen Querträgern in die Dachkonstruktion eindringt.

Gemäß einer weiteren Ausführungsform kann vorgesehen sein, dass der traufseitige Querträger eine Tropfkante aufweist, die bei Ausbildung der regensicheren Verbindung derart in das in Traufrichtung ausgebildete Profil des firstseitigen Querträgers ragt, dass Wasser von der Tropfkante in die erste Wasserrinne des firstseitigen Querträgers abtropfen kann. Die Tropfkante verhindert ein unkontrolliertes Eindringen von Wasser zwischen die Querträger der regensicheren Verbindung, in sie Wasser, das trotz Wassersperre zwischen die Querträger gelangt, geregelt in die erste Wasserrinne leitet.

Gemäß einer weiteren Ausführungsform kann vorgesehen sein, dass die erste Wasserrinne einen Grat aufweist, der so ausgestaltet ist, dass bei Ausbildung der regensicheren Verbindung Wasser vom Grat der ersten Wasserrinne in die zweite Wasserrinne abtropfen kann. Der Grat sorgt analog zur Tropfkante des traufseitigen Querträgers für ein geregeltes Abtropfen von überlaufendem Wasser. Über den Grat kann Wasser, das aus der ersten Wasserrinne überläuft, geregelt in die zweite Wasserrinne abtropfen. Auf diese Weise wird ein unkontrolliertes Eindringen von Wasser in die Dachkonstruktion verhindert.

Gemäß einer weiteren Ausführungsform kann vorgesehen sein, dass der firstseitige Querträger an seiner Unterseite eine Windsogsicherung aufweist, die bei Ausbildung der regensicheren Verbindung in das Profil des traufseitigen Querträgers ragt. Die Windsogsicherung sorgt für eine erhöhte Stabilität des Befestigungssystems, weil sie einem windbedingten Auftrieb des firstseitigen Querträgers entgegenwirkt. Gemäß einer weiteren Ausführungsform kann vorgesehen sein, dass die Windsogsicherung derart in das Profil des traufseitigen Querträgers ragt, dass die zweite Wasserrinne des traufseitigen Querträgers bei Ausbildung der regensicheren Verbindung auf der Windsogsicherung aufliegt. Die Windsogsicherung kann also beim Einführen des firstseitigen Querträgers in das Profil des traufseitigen Querträgers unter die zweite Wasserrinne geschoben werden, sodass der traufseitige Querträger bei auftretendem Wind in seiner Position gehalten wird und sich nicht von der Dachkonstruktion löst.

Gemäß einer weiteren Ausführungsform kann vorgesehen sein, dass der firstseitige Querträger an seiner Unterseite eine abgewinkelte Auflage aufweist, wobei die Auflage bei Ausbildung der Verbindung zwischen den Querträgern den auf dem Auflageabschnitt des traufseitigen Querträgers aufliegt. Die Auflage des firstseitigen Querträgers dient der Stabilisierung der Verbindung zwischen den Querträgern, weil der firstseitige Querträger durch die Auflage in einfacher Weise abgestützt wird.

Dabei kann insbesondere vorgesehen sein, dass Windsogsicherung und die Auflage des firstseitigen Querträgers formschlüssig in den Bereich zwischen der zweiten Wasserrinne und dem Auflageabschnitt des traufseitigen Querträgers passen. Die Profile der beiden Querträger können also so ausgebildet sein, dass sie passgenau ineinandergreifen. Auf diese Weise wird die Verbindung der Querträger zusätzlich stabilisiert.

Gemäß einer weiteren Ausführungsform kann vorgesehen sein, dass das Befestigungssystem einen firstseitigen Abschlussträger umfasst. Der Abschlussträger dient dem firstseitigen Abschluss des entlang der First-Traufe-Ebene obersten Moduls. Bei ordnungsgemäßer Montage werden die Module vom First in Richtung Traufe verlegt. Dabei können die firstseitigen Querträger aller Module, die nach ersten Modul verlegt werden, in das Profil des traufseitigen Querträgers des jeweils zuvor verlegten Moduls eingeführt werden. Da es für das zuerst verlegte Modul keinen solchen korrespondierenden traufseitigen Querträger gibt, ist der firstseitige Abschlussträger vorgesehen. Dieser kann an der Dachkonstruktion montiert und als Profil für den firstseitigen Querträger dienen. Gleichzeitig stellt der firstseitige Abschlussträger einen Wasserschutz dar, weil er bevorzugt eine Abdecklippe sowie eine Tropfkante und eine zweite Wasserrinnen aufweist. Im Wesentlichen kann vorgesehen sein, dass das traufseitige Profil des firstseitigen Abschlussträger identisch zu dem traufseitigen Profil des firstseitigen Querträgers ausgebildet ist.

Gemäß einer weiteren Ausführungsform kann vorgesehen sein, dass das Befestigungssystem eine traufseitige Abdeckung umfasst. Die traufseitige Abdeckung ist insbesondere eine Faszie und dient zum einen als Wasserschutz und zum anderen als ästhetischer traufseitiger Abschluss des in Traufrichtung letzten Moduls. Die Abdeckung umfasst bevorzugt eine in Firstrichtung ausgebildete Klemmleiste sowie eine auf der Oberseite der Abdeckung ausgebildete Klemmnut. Über die Klemmleiste und die Klemmnut lässt sich die traufseitige Abdeckung auf einfache Art und Weise in das Profil des traufseitigen Querträgers einklemmen.

Gemäß einer weiteren Ausführungsform kann vorgesehen sein, dass der Rahmen Eckwinkel zur Verbindung der profilierten Träger umfasst, wobei jeder Eckwinkel zwei zueinander rechtwinklig angeordnete Eckwinkelschenkel umfasst. Gemäß einer weiteren Ausführungsform kann vorgesehen sein, dass jeder der profilierten Träger eine Hohlkammer zur Aufnahme eines Eckwinkelschenkels aufweist. Durch die Eckwinkel können die Längs- und Querträger auf einfache Art und Weise miteinander zu einem Rahmen verbunden werden.

Gemäß einer weiteren Ausführungsform kann vorgesehen sein, dass jeder der profilierten Träger eine Fassung zur Aufnahme des plattenförmigen Bauelements aufweist. Hierdurch können die plattenförmigen Bauelemente, welche insbesondere PV-Elemente sind, sicher und zuverlässig von den Rahmen umschlossen und gefasst werden.

Ein weiterer Aspekt der Erfindung betrifft ein Modul für ein Dach, insbesondere für ein Schrägdach, umfassend ein Befestigungssystem gemäß dieser Offenbarung, wobei das Modul außerdem ein plattenförmiges Bauelement umfasst, das in dem Rahmen des Befestigungssystems eingefasst ist. Gemäß einer weiteren Ausführungsform kann vorgesehen sein, dass das plattenförmige Bauelement ein photovoltaisches Bauelement oder ein solarthermisches Bauelement ist. Entsprechend ist das Modul vorzugsweise ein PV-Modul oder ein solarthermisches Modul.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: in perspektivischer Ansicht die Träger und Eckwinkel eines Rahmens gemäß einer möglichen Ausführungsform;
- Fig. 2: in Querschnittsansicht einen firstseitigen Querträger gemäß einer möglichen Ausführungsform;
- Fig. 3: in Querschnittsansicht einen traufseitigen Querträger gemäß einer möglichen Ausführungsform;
- Fig. 4: in Querschnittsansicht einen Längsträger gemäß einer möglichen Ausführungsform;
- Fig. 5: einen Eckwinkel gemäß einer möglichen Ausführungsform;
- Fig. 6a,b: in Querschnittsansicht einen firstseitigen Abschlussträger gemäß einer möglichen Ausführungsform;
- Fig. 7a,b: in Querschnittsansicht eine traufseitige Abdeckung gemäß einer möglichen Ausführungsform;
- Fig. 8: in Querschnittsansicht eine regensichere Verbindung zwischen einem firstseitigen Querträger und einem traufseitigen Querträger gemäß einer möglichen Ausführungsform;
- Fig. 9: in perspektivischer Draufsicht vier an einer Dachkonstruktion montiere Module.

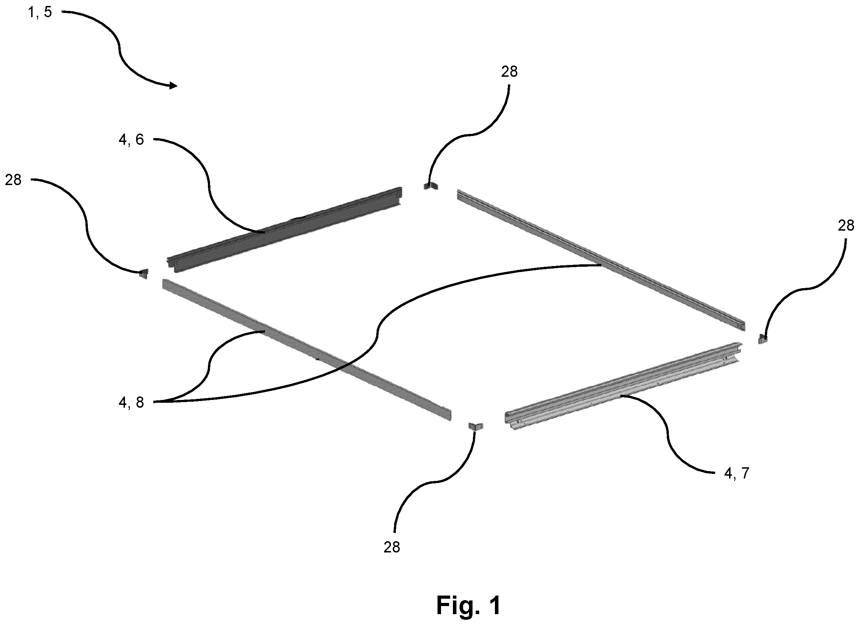

In Fig. 1 sind in perspektivischer Ansicht die profilierten Träger 4 sowie die Eckwinkel 28 eines Rahmens 5 gemäß einer möglichen Ausführungsform gezeigt. Das in Fig. 1 gezeigte Befestigungssystem 1 ist dabei ohne plattenförmiges Bauelement 2 dargestellt, welches üblicherweise vom Rahmen 5 umschlossen wird. Die Träger 4 umfassen einen firstseitigen Querträger 6 und einen traufseitigen Querträger 7, die jeweils über zwei Längsträger 8 verbunden werden und so den rechteckigen Rahmen 5 ausbilden. Die einzelnen Trägern 4 sind jeweils über die vier Eckwinkel 28 miteinander verbunden.

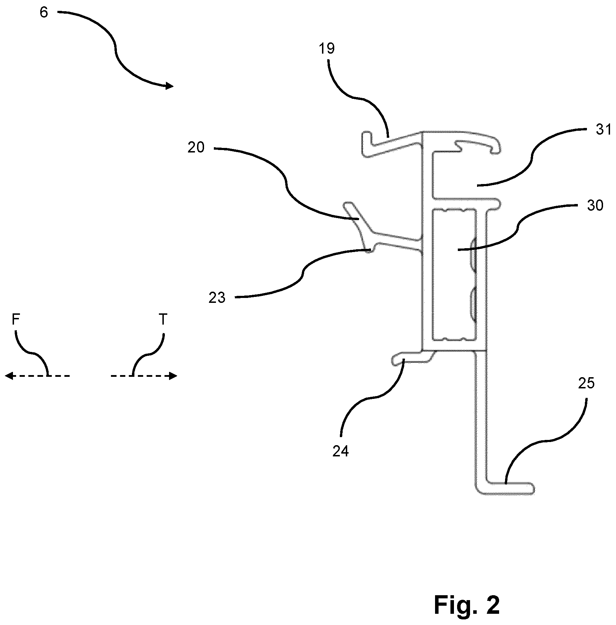

Fig. 2 zeigt in Querschnittsansicht einen firstseitigen Querträger 6 gemäß einer möglichen Ausführungsform. Der firstseitige Querträger 6 weist ein in Firstrichtung F ausgebildetes Profil sowie eine in Traufrichtung T ausgebildete Fassung 31 zur Aufnahme des plattenförmigen Bauelements 2 auf, wobei sich die Traufrichtung T und Firstrichtung F auf ein bestimmungsgemäß verlegtes Befestigungssystem 1 beziehen. In Traufrichtung T umfasst der firstseitige Querträger 6 eine Hohlkammer 30, welche nach unten hin an die Fassung 31 anschließt und der Aufnahme des Eckwinkels 28 (in Fig. 2 nicht gezeigt) dient.

Das in Firstrichtung F ausgebildete Profil des firstseitigen Querträgers 6 umfasst an der Oberseite des firstseitigen Querträgers 6 Wassersperre 19 auf, die bei bestimmungsgemäßem Gebrauch des Befestigungssystems 1 bei Ausbildung der regensicheren Verbindung 9 mit dem traufseitigen Querträger 7 unterhalb der Abdecklippe 10 des traufseitigen Querträgers 7 angeordnet ist. Die Wassersperre 19 dient als Wasserschutz, indem sie eindringendes Regenwasser auffängt.

Unterhalb der Wassersperre 19 weist das Profil des firstseitigen Querträgers 6 eine erste Wasserrinne 20 mit einem Grat 23 auf. Die Wasserrinne 20 ragt bei Ausbildung der Verbindung 9 der Querträger 6, 7 in das Profil des traufseitigen Querträgers 7. Wenn Regenwasser zwischen die beiden Querträger 6, 7 läuft, kann es in der ersten Wasserrinne 20 gesammelt werden und anschließend über entsprechende Abflussrinnen in Richtung der Längsträger 8 ablaufen. Der Grat 23 sorgt dabei für ein geregeltes Abtropfen des aus der ersten Wasserrinne 20 überlaufenden Wassers.

An seiner Unterseite weist der firstseitige Querträger 6 eine Windsogsicherung 24 auf, die einem windbedingten Auftrieb des Querträgers 6 entgegenwirkt. Dabei greift die Windsogsicherung 24 derart in das Profil des traufseitigen Querträgers 7 ein, dass der traufseitige Querträger 7 bei Ausbildung der regensicheren Verbindung auf der Windsogsicherung 24 aufliegt.

Der firstseitige Querträger 6 weist an seiner Unterseite außerdem eine Auflage 25 auf, die bei Ausbildung der regensicheren Verbindung 9 der Querträger 6, 7 auf dem Auflageabschnitt 17 des traufseitigen Querträgers 7 (in Fig. 2 nicht gezeigt) aufliegt. Die Auflage 25 kann zusammen mit der Windsogsicherung 24 in einen eigens darauf abgestimmten Abschnitt des traufseitigen Querträgers 7 eingreifen und dort eine formschlüssige Verbindung ausbilden.

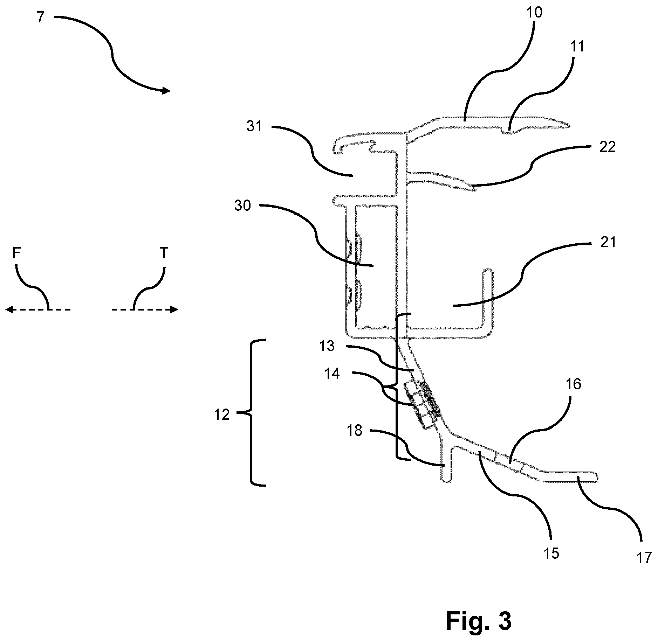

Fig. 3 zeigt in Querschnittsansicht einen traufseitigen Querträger 7 gemäß einer möglichen Ausführungsform. Der traufseitige Querträger 7 weist ein in Traufrichtung T ausgebildetes Profil sowie eine in Firstrichtung F ausgebildete Fassung 31 zur Aufnahme des plattenförmigen Bauelements 2 auf.

Das in Traufrichtung T ausgebildete Profil umfasst an der Oberseite des traufseitigen Querträgers 7 eine Abdecklippe 10, die bei bestimmungsgemäßem Gebrauch des Befestigungssystems 1 in Traufrichtung T ragt und zumindest gemäß dem in Fig. 3 gezeigten Beispiel bei Ausbildung der regensicheren Verbindung 9 die Oberseite des firstseitigen Querträgers 6 vollständig überdeckt. Die Abdecklippe 10 weist an ihrer Unterseite eine als Wulst ausgestaltete Kapillarsperre 11 aufweist, die bei Ausbildung der regensicheren Verbindung 9 auf die Oberseite des firstseitigen Querträgers 6 drückt. Hierdurch kann der firstseitige Querträger 6 zuverlässig im Profil des traufseitigen Querträger 7 gehalten werden.

Der in Fig. 3 gezeigte traufseitige Querträger 7 weist an seiner Unterseite außerdem ein Montageelement 12 zur Montage des Querträgers 7 an der Dachkonstruktion 3 auf. Das Montageelement 12 umfasst drei Abschnitte: einen ersten Abschnitt 13 mit einer Kabelanbindung 14, einen zweiten Abschnitt 15 mit Montagelöchern 16, und einen Auflageabschnitt 17. Die Kabelanbindung 14 kann beispielsweise als Verbindungsstelle für das Erdungskabel eines PV-Elements ausgestaltet sein.

Der erste Abschnitt 13 ragt nicht senkrecht von der Unterseite des traufseitigen Querträgers 7 ab, sondern in einem Winkel von ca. 70°. Der erste Abschnitt 13 geht über einen Knick in den zweiten Abschnitt 15 über, wobei zwischen den beiden Abschnitten 13, 15 ein Winkel ca. 135° aufgespannt wird. Der zweite Abschnitt 15 geht derart in den Auflageabschnitt 17 über, dass zwischen den beiden Abschnitten 15, 17 ein Winkel ca. 155° aufgespannt wird. Entsprechend verläuft der Auflageabschnitt 17 im Wesentlichen parallel zur Unterseite des traufseitigen Querträgers 7. Durch den im Vergleich zur Montagefläche schräg verlaufenden zweiten Abschnitt 15 und die im zweiten Abschnitt 15 eingelassenen den Montagelöchern 16 können auch die Fixiermittel, welche vorzugsweise Schrauben sind, aus einem Winkel in die Dachkonstruktion 3 eingeführt werden, der nicht senkrecht zur Montagefläche verläuft. Hierdurch ergibt sich beim Einbringen der Fixiermittel ein größerer Freiraum für den Monteur. Da der Auflageabschnitt 17 gleichzeitig flach auf der Montagefläche der Dachkonstruktion 3 aufliegen kann, wird eine große Kontaktfläche zwischen der Montagefläche 17 und dem Montagelement 12 hergestellt, was eine besonders zuverlässige Verbindung des an der Dachkonstruktion 3 montierten traufseitigen Querträgers 7 zur Folge hat.

Das in Traufrichtung T ausgebildete Profil des traufseitigen Querträgers 7 umfasst außerdem eine Tropfkante 22, die unterhalb der Abdecklippe 10 angeordnet ist. Über die Tropfkante 22 kann in das Profil eindringendes Wasser in eine Wasserrinne abtropfen. An seiner Unterseite weist das Profil eine Wasserrinne 21 auf, welche bei Ausbildung der Verbindung 9 mit dem traufseitigen Querträger 7 die zweite Wasserrinne 21, sprich die am weitesten unten ausgebildete Wasserrinne 21 ist.

In Firstrichtung F umfasst der traufseitige Querträger 7 eine Hohlkammer 30. Die Hohlkammer schließt nach unten hin an die Fassung 31 an und dient der Aufnahme des Eckwinkels 28 (in Fig. 3 nicht gezeigt).

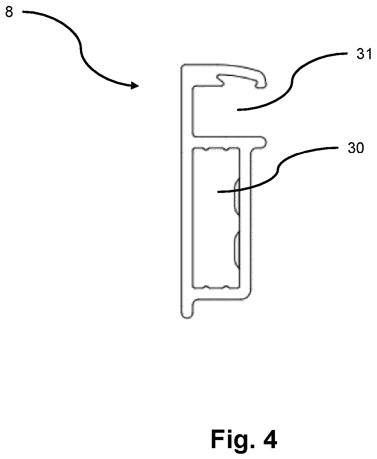

Fig. 4 zeigt in Querschnittsansicht einen Längsträger 8 gemäß einer möglichen Ausführungsform. Der Rahmen 5 des Befestigungsträgers 1 weist dabei bevorzugt zwei identische Längsträger 8 auf. Jeder Längsträger 8 umfasst eine Fassung 31 zur Aufnahme des plattenförmigen Bauelements 2 auf. Unterhalb der Fassung 31 ist eine Hohlkammer 30 zur der Aufnahme des Eckwinkels 28 ausgebildet (in Fig. 4 nicht gezeigt).

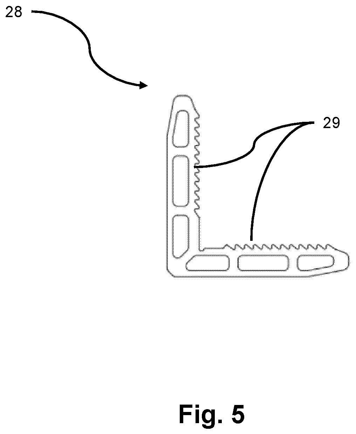

Fig. 5 zeigt einen Eckwinkel 28 gemäß einer möglichen Ausführungsform. Der Eckwinkel 28 dient zur Verbindung der profilierten Träger 4 und umfasst zwei zueinander rechtwinklig angeordnete Eckwinkelschenkel 29. Die Eckwinkelschenkel 29 sind so ausgestaltet, dass sie formschlüssig in die Hohlkammern 30 der profilierten Träger 4 eingreifen können.

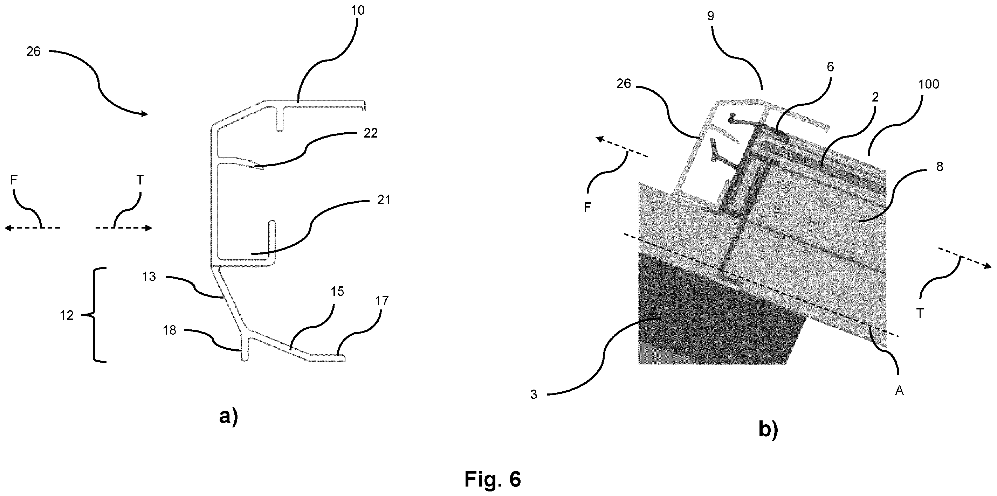

Fig. 6a und Fig. 6b zeigen in Querschnittsansicht einen firstseitigen Abschlussträger 26 gemäß einer möglichen Ausführungsform. Fig. 6a zeigt den firstseitigen Abschlussträger 26 dabei als separates Bauteil. Fig. 6b zeigt einen firstseitigen Abschlussträger 26, der den firstseitigen Querträger 6 eines Moduls 100 aufgenommen hat und mit dem Querträger 6 eine regensichere Verbindung 9 ausbildet. Die räumliche Orientierung der Fig. 6a und die räumliche Orientierung der Fig. 6b unterscheiden sich außerdem dahingehend voneinander, dass Fig. 6b den firstseitigen Abschlussträger 26 und den darin eingreifenden firstseitigen Querträger 6 in schräger Ausrichtung zeigt, während der firstseitige Abschlussträger 26 in Fig. 6a waagerecht gezeigt ist. Die schräge Darstellung in Fig. 6b soll den Zustand der Montage auf einem Schrägdach verdeutlichen. Der firstseitige Abschlussträger 26 dient dem firstseitigen Abschluss des entlang der First-Traufe-Ebene obersten Moduls 100. Für das oberste Modul 100 gibt es keinen korrespondierenden traufseitigen Querträger 7, in den der firstseitige Querträger 6 eingreifen könnte. Daher wird ein firstseitiger Abschlussträger 27 an die Dachkonstruktion 3 montiert, der ein Profil bereitstellt, in das der firstseitige Querträger 6 des obersten Moduls 100 eingreifen kann. Gleichzeitig stellt der firstseitige Abschlussträger 27 einen Wasserschutz dar. Dazu weist er analog zu den traufseitigen Querträgern 7 eine Abdecklippe 10, eine Tropfkante 22 und eine zweite Wasserrinne 21 auf. Darüber hinaus weist der firstseitige Abschlussträger 27 gemäß dem Beispiel aus Fig. 6 ein Montageelement 12 mit einem ersten Abschnitt 13, einem zweiten Abschnitt 16 und mit einem Auflageabschnitt 17 auf.

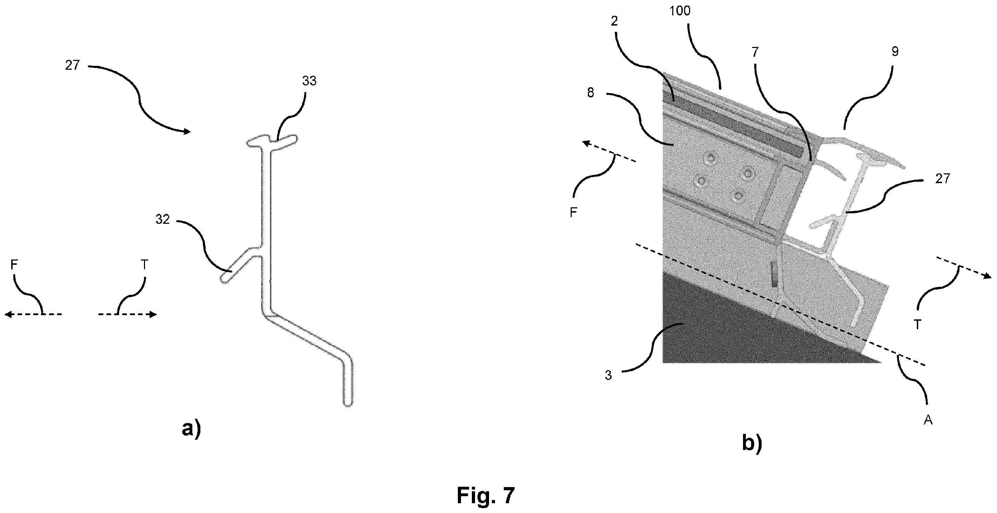

Fig. 7a und Fig. 7b zeigen in Querschnittsansicht eine traufseitige Abdeckung 27 gemäß einer möglichen Ausführungsform. Fig. Fa zeigt die traufseitige Abdeckung 27 dabei als separates Bauteil. Fig. 7b zeigt eine traufseitige Abdeckung 27, die in den traufseitigen Querträger 7 eines Moduls 100 eingreift. Die räumliche Orientierung der Fig. 7a und die räumliche Orientierung der Fig. 7b unterscheiden sich außerdem analog zu den Figuren 6a und 6b voneinander. Die Abdeckung 27 ist im gezeigten Beispiel eine Faszie und dient als ästhetischer traufseitiger Abschluss des in Traufrichtung T als letztes verlegten Moduls 100. Wie in Fig. 7 gezeigt ist, umfasst die Abdeckung 27 eine in Firstrichtung F ausgebildete Klemmleiste 32 sowie eine auf der Oberseite der Abdeckung 27 ausgebildete Klemmnut 33. Die Klemmleiste 32 kann dabei vorteilhafterweise in die Wasserrinne 21 des traufseitigen Querträgers 7 eingehakt werden. Die Klemmnut 33 wird unter die Abdecklippe 10 des traufseitigen Querträgers 7 geschoben und dort mit der Kapillarsperre 11 verklemmt. Hierdurch wird ein Eindringen von Wasser in das traufseitige Profil des traufseitigen Querträgers 7 verhindert.

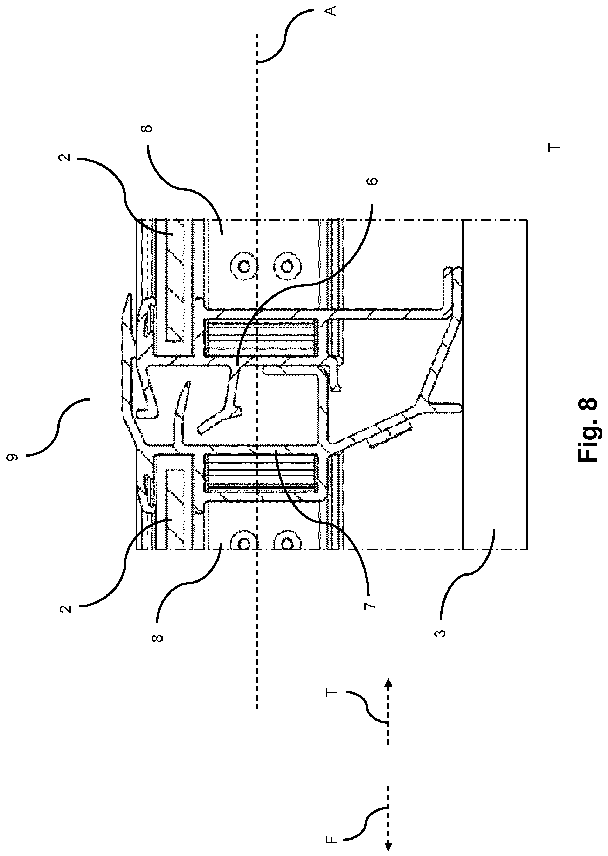

Fig. 8 zeigt in Querschnittsansicht eine regensichere Verbindung 9 zwischen einem firstseitigen Querträger 6 und einem traufseitigen Querträger 7 gemäß einer möglichen Ausführungsform. Die Profile der beiden Querträger 6, 7 sind dabei so aufeinander abgestimmt, dass sie formschlüssig ineinandergreifen. Von unten nach oben, sprich von der Montagefläche der Dachkonstruktion 3 ausgehend in Richtung Dachauflage, sind die Strukturen der Profile der Querträger 6, 7 wie folgt angeordnet: Zunächst liegen der Vorsprung 18 und der Auflageabschnitt 17 des Montageelements 12 des traufseitigen Querträgers 7 auf der Montagefläche der Dachkonstruktion 3 auf. Es folg die Auflage 25 des firstseitigen Querträgers 6, welche auf der Auflageabschnitt 17 des traufseitigen Querträgers 7 aufliegt. Als nächstes weist der firstseitige Querträger 6 eine Windsogsicherung 24, die unter der zweiten Wasserrinne 21 in das Profil des traufseitigen Querträgers 7 eingreift. Oberhalb der der zweiten Wasserrinne 21 ist die erste Wasserrinne 20 des firstseitigen Querträgers 6 angeordnet. Die erste Wasserrinne 20 weist den Grat 23 auf, über den Wasser von der ersten Wasserrinne 20 in die zweite Wasserrinne 21 abtropfen kann. Als nächste Struktur ist die Tropfkante 22 des traufseitigen Querträgers 7 vorgesehen, über die Wasser in die erste Wasserrinne 20 abtropfen kann. Oberhalb der Tropfkante 22 ist die Wassersperre 19 des firstseitigen Querträgers 6 angeordnet. Schließlich folgt als oberste Struktur die Abdecklippe 10 des traufseitigen Querträgers 7 mitsamt der Kapillarsperre 11.

Folglich sind die oberste und die unterste Struktur der regensicheren Verbindung 9 jeweils Strukturen des Profils traufseitigen Querträgers 7. Das Profil des fristseitigen Querträgers 6 wird also im Wesentlichen vollständig vom Profil des traufseitigen Querträgers 7 aufgenommen. Die Profile der Querträger 6, 7 sind entsprechend aufeinander abgestimmt, um passgenau ineinanderzugreifen.

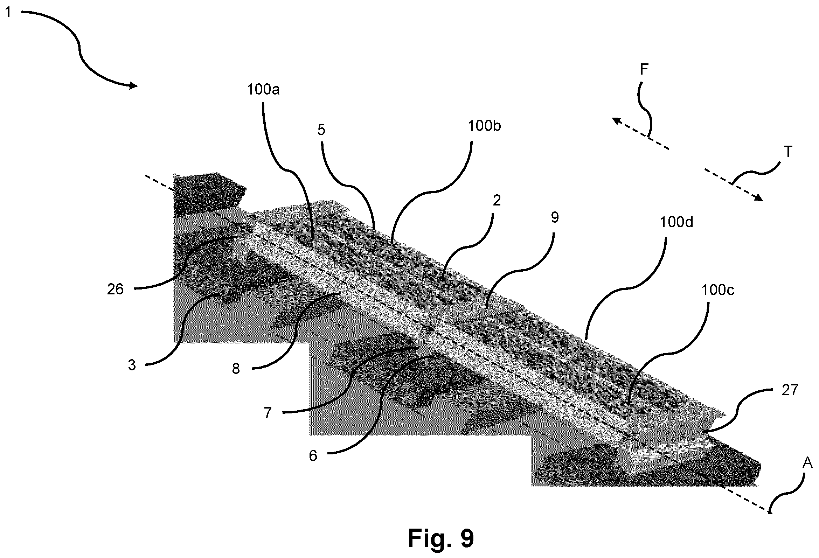

Fig. 9 zeigt in perspektivischer Draufsicht vier Module 100a-d, die an einer Dachkonstruktion 3 montiert sind. Jedes Modul 100a-d umfasst ein plattenförmiges Bauelement 2, das in einem Rahmen 5 eingefasst ist. Die plattenförmigen Bauelemente 2 sind im gezeigten Beispiel PV-Laminate.

Die Module 100a-d sind in Längsrichtung (F-T) sowie in Querrichtung im Wesentlichen stufenlos in einer Ebene verlegt, der First-Traufe-Ebene A. Die Querrichtung verläuft dabei parallel zur Längsrichtung. Wie in Fig. 9 gezeigt ist, sind die beiden oberen Module 100a,b in Firstrichtung F über ihre firstseitigen Querträger 6 mit firstseitigen Abschlussträgern 26 verbunden, welche an der Dachkonstruktion 3 befestiget sind. In Traufrichtung T sind die beiden oberen Module 100a,b über traufseitigen Querträger 7 mit den firstseitigen Querträger 6 der beiden unteren Module 100c,d verbunden, wobei die beiden firstseitigen Querträger 6 der oberen Module 100a,b mit den traufseitigen Querträgern 7 der unteren 100c,d jeweils eine regensichere Verbindung 9 ausbilden.

Die traufseitigen Querträger 7 der beiden unteren Module 100c,d schließen in Traufrichtung T jeweils mit einer traufseitigen Abdeckung 27 ab, welche im gezeigten Beispiel Faszien sind.

Zur Vermeidung von Wiederholungen sollen vorrichtungsgemäß offenbarte Merkmale auch als verfahrensgemäß offenbart gelten. Ebenso sollen verfahrensgemäß offenbarte Merkmale als vorrichtungsgemäß offenbart gelten.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Befestigungssystem | 100 | Modul |
| 2 | Plattenförmiges Bauelement | | |
| 3 | Dachkonstruktion | | |
| 4 | Profilierte Träger | A | First-Traufe-Ebene |
| 5 | Rahmen | F | Firstrichtung |
| 6 | Firstseitiger Querträger | T | Traufrichtung |
| 7 | Traufseitiger Querträger | | |
| 8 | Längsträger | | |
| 9 | Verbindung | | |
| 10 | Abdecklippe | | |
| 11 | Kapillarsperre | | |
| 12 | Montageelement | | |
| 13 | Erster Abschnitt | | |
| 14 | Kabelanbindung | | |
| 15 | Zweiter Abschnitt | | |
| 16 | Montagelöcher | | |
| 17 | Auflageabschnitt | | |
| 18 | Vorsprung | | |
| 19 | Wassersperre | | |
| 20 | Erste Wasserrinne | | |
| 21 | Zweite Wasserrinne | | |
| 22 | Tropfkante | | |
| 23 | Grat | | |
| 24 | Windsogsicherung | | |
| 25 | Auflage | | |
| 26 | Firstseitiger Abschlussträger | | |
| 27 | Traufseitige Abdeckung | | |
| 28 | Eckwinkel | | |
| 29 | Eckwinkelschenkel | | |
| 30 | Hohlkammer | | |
| 31 | Fassung | | |
| 32 | Klemmleiste | | |
| 33 | Klemmnut | | |

## Patentansprüche

1. Befestigungssystem (1) zur Befestigung eines plattenförmiges Bauelements (2) an einer Dachkonstruktion (3), wobei das Befestigungssystem (1) profilierte Träger (4) umfasst, die zu mindestens einem das Bauelement (2) umschließenden Rahmen (5) verbindbar ausgestaltet sind, und wobei die profilierten Träger (4) einen firstseitigen Querträger (6) und einen traufseitigen Querträger (7) sowie zwei in First-Traufe-Richtung (FT) verlaufende Längsträger (8) umfassen, **dadurch gekennzeichnet, dass** der firstseitige Querträger (6) und der traufseitige Querträger (7) zur Ausbildung einer regensicheren Verbindung (9) ausgestaltet sind, so dass eine überdeckungsfreie Aneinanderreihung der plattenförmigen Bauelementen (2) in First-Traufe-Richtung (FT) erfolgt.

2. Befestigungssystem (1) nach Anspruch 1, **dadurch gekennzeichnet, dass** der traufseitige Querträger (7) an seiner Oberseite eine Abdecklippe (10) aufweist, die bei bestimmungsgemäßem Gebrauch des Befestigungssystems (1) in Traufrichtung ragt und bei Ausbildung der regensicheren Verbindung (9) den firstseitigen Querträger (6) zumindest partiell überdeckt.

3. Befestigungssystem (1) nach Anspruch 2, **dadurch gekennzeichnet, dass** die Abdecklippe (10) an ihrer Unterseite eine Kapillarsperre (11) aufweist, die bei bestimmungsgemäßem Gebrauch des Befestigungssystems (1) auf der Oberseite des firstseitigen Querträgers (6) aufliegt.

4. Befestigungssystem (1) nach einem der vorgehenden Ansprüche, **dadurch gekennzeichnet, dass** der traufseitige Querträger (7) an seiner Unterseite ein Montageelement (12) zur Montage des traufseitigen Querträgers (7) an der Dachkonstruktion (3) aufweist.

5. Befestigungssystem (1) nach Anspruch 4, **dadurch gekennzeichnet, dass** das Montageelement (12) einen ersten Abschnitt (13) mit einer Kabelanbindung (14), einen an den ersten Abschnitt (13) anschließenden zweiten Abschnitt (15) mit Montagelöchern (16), und einen an den zweiten Abschnitt (15) anschließenden Auflageabschnitt (17) umfasst.

6. Befestigungssystem (1) nach Anspruch 5, **dadurch gekennzeichnet, dass** der erste Abschnitt (13) und der zweite Abschnitt (15) des Montageelements (12) bei bestimmungsgemäßer Montage des Befestigungssystems (1) jeweils schräg zur Montagefläche der Dachkonstruktion (3) verlaufen, und dass der Auflageabschnitt (17) bei bestimmungsgemäßer Montage des Befestigungssystems (1) parallel zur Montagefläche der Dachkonstruktion (3) verläuft.

7. Befestigungssystem (1) nach einem der Ansprüche 5 oder 6, **dadurch gekennzeichnet, dass** der Auflageabschnitt (17) bei bestimmungsgemäßer Montage des Befestigungssystems (1) flach auf der Montagefläche der Dachkonstruktion (3) aufliegt.

8. Befestigungssystem (1) nach einem der Ansprüche 4 bis 7, **dadurch gekennzeichnet, dass** das Montageelement (12) einen Vorsprung (18) aufweist, der bei bestimmungsgemäßer Montage des Befestigungssystems (1) mit der Montagefläche der Dachkonstruktion (3) in Kontakt kommt.

9. Befestigungssystem (1) nach einem der vorhergehenden Ansprüche, **dadurch gekennzeichnet, dass** der firstseitige Querträger (6) an seiner Oberseite eine Wassersperre (19) aufweist, die bei Ausbildung der regensicheren Verbindung (9) in das Profil des traufseitigen Querträgers (7) ragt.

10. Befestigungssystem (1) nach einem der vorhergehenden Ansprüche, **dadurch gekennzeichnet, dass** der firstseitige Querträger (6) eine erste Wasserrinne (20) aufweist, die bei Ausbildung der regensicheren Verbindung (9) in das Profil des traufseitigen Querträgers (7) ragt, wobei die erste Wasserrinne (20) vorzugsweise unterhalb der Wassersperre (19) angeordnet ist.

11. Befestigungssystem (1) nach einem der vorhergehenden Ansprüche, **dadurch gekennzeichnet, dass** der traufseitige Querträger (7) eine zweite Wasserrinne (21) aufweist, die bei Ausbildung der regensicheren Verbindung (9) in das Profil des firstseitigen Querträgers (6) ragt, wobei die zweite Wasserrinne (21) vorzugsweise an der Unterseite des traufseitigen Querträgers (7) angeordnet ist

12. Befestigungssystem (1) nach einem der Ansprüche 10 oder 11, **dadurch gekennzeichnet, dass** der traufseitige Querträger (7) eine Tropfkante (22) aufweist, die bei Ausbildung der regensicheren Verbindung (9) derart in das Profil des firstseitigen Querträgers (6) ragt, dass Wasser von der Tropfkante (22) in die erste Wasserrinne (20) abtropfen kann.

13. Befestigungssystem (1) nach einem der Ansprüche 10 bis 12, **dadurch gekennzeichnet, dass** die erste Wasserrinne (20) einen Grat (23) aufweist, der so ausgestaltet ist, dass bei Ausbildung der regensicheren Verbindung (9) Wasser vom Grat (23) der ersten Wasserrinne (20) in die zweite Wasserrinne (21) abtropfen kann.

14. Befestigungssystem (1) nach einem der vorhergehenden Ansprüche, **dadurch gekennzeichnet, dass** der firstseitige Querträger (6) an seiner Unterseite eine Windsogsicherung (24) aufweist, die bei Ausbildung der regensicheren Verbindung (9) in das Profil des traufseitigen Querträgers (7) ragt.

15. Befestigungssystem (1) nach Anspruch 14, **dadurch gekennzeichnet, dass** die Windsogsicherung (24) derart in das Profil des traufseitigen Querträgers (7) ragt, dass die zweite Wasserrinne (21) des traufseitigen Querträgers (7) bei Ausbildung der regensicheren Verbindung (9) auf der Windsogsicherung (24) aufliegt.

16. Befestigungssystem (1) nach einem der Ansprüche 5 bis 15, **dadurch gekennzeichnet, dass** der firstseitige Querträger (6) an seiner Unterseite eine Auflage (25) aufweist, wobei die Auflage (25) bei Ausbildung der regensicheren Verbindung (9) auf dem Auflageabschnitt (17) des traufseitigen Querträgers (7) aufliegt.

17. Befestigungssystem (1) nach einem der vorhergehenden Ansprüche, **dadurch gekennzeichnet, dass** jeder der profilierten Träger (4) eine Fassung (31) zur Aufnahme des plattenförmigen Bauelements (2) aufweist.

18. Modul (100) für ein Dach, insbesondere für ein Schrägdach, umfassend ein Befestigungssystem (1) gemäß einem der vorhergehenden Ansprüche, wobei das Modul (100) außerdem ein plattenförmiges Bauelement (2) umfasst, das in dem Rahmen (5) des Befestigungssystems (1) eingefasst ist.

19. Modul (100) nach Anspruch 18, **dadurch gekennzeichnet, dass** das plattenförmige Bauelement (2) ein photovoltaisches Bauelement oder ein solarthermisches Bauelement ist.
